# EUROPEAN PATENT APPLICATION

(11) **EP 4 293 632 A1**
(43) Date of publication of application: **20.12.2023**
(21) Application number: 22193648.7
(22) Date of filing: 02.09.2022
(51) Int. Cl.: G06V 20/13, G06V 10/94

(54) **ANALYSIS SYSTEM FOR SATELLITE INFORMATION UTILIZATION AND THE OPERATION METHOD FOR THE SAME**

(30) Priority: 15.06.2022 KR 20220072527
(71) Applicant: Contec Co., Ltd., Daejeon 34133 (KR)
(72) Inventor: LEE, Sunghee, 30104 Sejong-si (KR)
(74) Representative: Frenkel, Matthias Alexander

(57) **Abstract**

Provided is a satellite information-based analysis system including a satellite information reception processing unit configured to receive satellite information in a form of raw data from a ground station terminal, to perform demodulation and preprocessing, and to store the satellite information; a standard image generator configured to generate a standard image for the stored satellite information; and an application processing unit configured to process and generate the generated standard image into a utilization image that is classified into a plurality of categories based on an intended use.

## Description

### CROSS-REFERENCE TO RELATED APPLICATIONS

This application claims the benefit under 35 USC § 119(a) of Korean Patent Application No. 10-2022-0072527 filed on June 15, 2022 in the Korean Intellectual Property Office, the entire disclosure of which is incorporated herein by reference for all purposes.

### BACKGROUND

### 1. Field

At least one example embodiment relates to technology for receiving and processing satellite information, and more particularly, to technology for classifying and processing satellite information received by a ground station based on a utilization field or available satellite information and using the processed satellite information for a national defense, a disaster, and a smart city, and generating analysis data suitable for an intended use.

### 2. Description of Related Art

An artificial satellite refers to an object that may fly in a predetermined circle or an elliptical orbit around the earth. The artificial satellite may be mounted on a launch vehicle and then fired to enter a predetermined orbit in the space and to perform a variety of predefined operations in the orbit. The artificial satellite functions to exchange data with other ground-based communication/electronic devices (e.g., satellite antennas and set-top boxes connected thereto) and/or to observe the ground surface while orbiting the earth.

To control, for example, monitor the artificial satellite or the launch vehicle and to receive data gathered by the artificial satellite, a space ground station is installed on the ground. The space ground station may communicate with the artificial satellite based on a standardized frequency and communication protocol, may transmit a control signal for a specific operation (e.g., photographing) to the artificial satellite and/or receive data (e.g., image data on the ground surface) acquired by the artificial satellite based on the specific operation, and may perform a variety of processing based on the received data.

Currently, about 1,600 artificial satellites are orbiting the earth and a number of artificial satellites around the earth are expected to increase as a space market is evolved from government-led development to private-led development.

As an amount of satellite information received from artificial satellites increases, an amount of data to be processed by the ground station may exponentially increase. In particular, the field that may be used for satellite image information may vary depending on a degree of processing.

Here, it is difficult for an information consumer that desires to use satellite information in a desired field to be aware of detailed information on processing and classification of a satellite image and an access is limited. Accordingly, there is a need for a system that may provide suitable satellite image information when an intended use and an utilization topic of the information consumer is determined.

Patent documents include Korean Patent Registration No. 2162284 titled "cloud data processing global navigation satellite system (GNSS) jamming monitoring method and system" and Korean Patent Registration No. 2267766 titled "system and method for image navigation and registration of satellites."

### SUMMARY

An objective of at least one example embodiment is to provide technology for storing, preprocessing, and using satellite information through a cloud server to which a synthetic aperture radar (SAR) and an analysis algorithm are mounted.

An objective of at least one example embodiment is to provide a system that may automatically generate or provide satellite information with corresponding quality when a utilization field of the satellite information is determined.

According to an aspect of at least one example embodiment, there is provided an analysis system operating at a cloud level and including a satellite information reception processing unit configured to receive satellite information in a form of raw data from a ground station terminal, to perform demodulation and preprocessing, and to store the satellite information; a standard image generator configured to generate a standard image for the stored satellite information; and an application processing unit configured to process and generate the generated standard image into a utilization image that is classified into a plurality of categories based on an intended use.

The application processing unit may be configured to process the standard image into the utilization image using a prestored analysis algorithm corresponding to at least one topic or at least one category selected from a customer system.

The application processing unit may be configured to generate analysis data from the utilization image using a prestored analysis algorithm corresponding to at least one topic or at least one category selected from a customer system.

The application processing unit may be configured to classify the standard image into at least one of a synthetic aperture radar (SAR) image and an electro-optical (EO) image, and to process one of the SAR image and the EO image into the utilization image using a prestored analysis algorithm.

The application processing unit may be configured to classify the standard image into at least one of a SAR image and an EO image, and to combine and process the SAR image or the EO image into the utilization image using a prestored analysis algorithm.

According to at least one example embodiment, there is provided an operation method of a satellite information-based analysis system, the method including receiving satellite information in a form of raw data from a ground station terminal, performing demodulation and preprocessing, and storing the satellite information; generating a standard image for the stored satellite information; and processing and generating the generated standard image into a utilization image that is classified into a plurality of categories based on an intended use.

The processing and the generating of the generated standard image may include processing the standard image into the utilization image using a prestored analysis algorithm corresponding to at least one topic or at least one category selected from a customer system.

The processing and the generating of the generated standard image may include generating analysis data from the utilization image using a prestored analysis algorithm corresponding to at least one topic or at least one category selected from a customer system.

The processing and the generating of the generated standard image may include classifying the standard image into at least one of a synthetic aperture radar (SAR) image and an electro-optical (EO) image; and processing one of the SAR image and the EO image into the utilization image using a prestored analysis algorithm.

The processing and the generating of the generated standard image may include classifying the standard image into at least one of a SAR image and an EO image; and combining and processing the SAR image or the EO image into the utilization image using a prestored analysis algorithm.

According to some example embodiments, it is possible to provide technology for storing, preprocessing, and using satellite information through a cloud server to which a SAR and an analysis algorithm are mounted.

According to some example embodiments, it is possible to provide satellite information with a processing level and image quality suitable for an intended use of a satellite image.

According to some example embodiments, it is possible to selectively provide an image with more excellent quality using an EO image and a SAR image.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 illustrates a satellite information-based analysis system according to an example embodiment;
FIG. 2 is a diagram illustrating a configuration of a satellite information reception processing unit according to an example embodiment;
FIG. 3 illustrates an example of information stored for each level;
FIG. 4 illustrates a detailed example for each level; and
FIG. 5 is a flowchart illustrating an operation method of a satellite information-based analysis system according to an example embodiment.

### DETAILED DESCRIPTION

Specific structural or functional descriptions related to example embodiments according to the concept of the present invention set forth herein are simply provided to explain the example embodiments according to the concept of the present invention and the example embodiments according to the concept of the present invention may be implemented in various forms and are not limited to the example embodiments described herein.

Various modifications may be made to the example embodiments according to the concept of the present invention. Therefore, the example embodiments are illustrated in the drawings and are described in detail with reference to the detailed description. However, the example embodiments are not construed as being limited to the specific disclosure and should be understood to include all changes, equivalents, and replacements within the idea and the technical scope of the present invention.

Although terms of "first," "second," and the like may be used to explain various components, the components are not limited to such terms. These terms are used only to distinguish one component from another component. For example, a first component may be referred to as a second component, or similarly, the second component may be referred to as the first component within the scope of the present invention.

When it is mentioned that one component is "connected" or "accessed" to another component, it may be understood that the one component is directly connected or accessed to another component or that still other component is interposed between the two components. In addition, it should be noted that if it is described in the specification that one component is "directly connected" or "directly accessed" to another component, still other component may not be present therebetween. Likewise, expressions, for example, "between" and "immediately between" and "adjacent to" and "immediately adjacent to" may also be construed as described in the foregoing.

The terminology used herein is for the purpose of describing particular example embodiments only and is not to be limiting of the example embodiments. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined herein, all terms used herein including technical or scientific terms have the same meanings as those generally understood by one of ordinary skill in the art. Terms defined in dictionaries generally used should be construed to have meanings matching contextual meanings in the related art and are not to be construed as an ideal or excessively formal meaning unless otherwise defined herein.

Hereinafter, example embodiments will be described in detail with reference to the accompanying drawings. However, the scope of the claims is not limited to or restricted by such example embodiments. Like reference numerals refer to like components throughout.

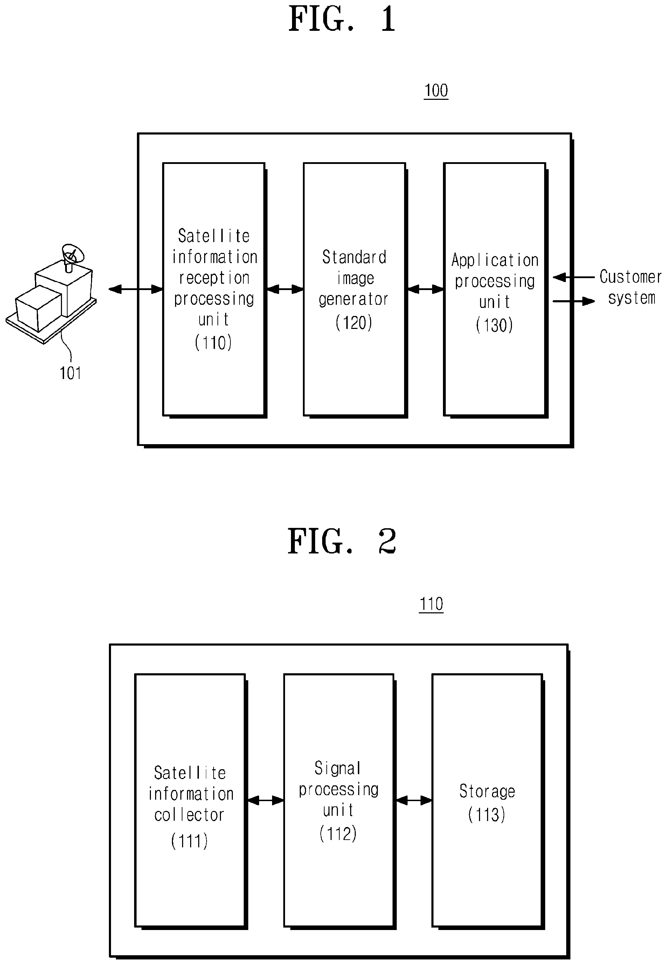

FIG. 1 illustrates a satellite information-based analysis system 100 according to an example embodiment.

Using the satellite information-based analysis system 100 according to an example embodiment, it is possible to provide flexible and universal satellite information reception technology by implementing signal processing of a satellite different for each manufacturer of a modem of the satellite or ground station as software at a cloud level.

In addition, the present invention may provide technology for storing, preprocessing, and using satellite information through a cloud server to which a synthetic aperture radar (SAR) and an analysis algorithm are mounted.

Also, using the satellite information-based analysis system 100 according to an example embodiment, it is possible to provide stable and fast processing of satellite information by collectively processing receiving, storing, preprocessing, and using of a satellite signal at a cloud level, and to quickly and conveniently maintain, manage, and update a modem of a ground station by implementing the modem of the ground station implemented as hardware as software in a cloud.

Also, using the satellite information-based analysis system 100 according to an example embodiment, it is possible to prevent a hacking attempt on a modem of a ground station by implementing the modem of the ground station as hardware as software in a cloud.

To this end, the satellite information-based analysis system 100 may include a satellite information reception processing unit 110, a standard image generator 120, and an application processing unit 130.

Also, the satellite information reception processing unit 110 according to an example embodiment may receive satellite information in a form of raw data from a ground station terminal, may perform demodulate and preprocessing, and may store the satellite information.

The standard image generator 120 according to an example embodiment may generate a standard image for the stored satellite information.

The application processing unit 130 according to an example embodiment may process and generate the generated standard image into a utilization image that is classified into a plurality of categories based on an intended use.

For example, the application processing unit 130 may process the standard image into the utilization image using a prestored analysis algorithm corresponding to at least one topic or at least one category selected from a customer system.

For example, the standard image may be interpreted as an image that is generated by performing level 2 processing of at least one among radio metric processing, geometry processing, and spatial metry processing with respect to a satellite image.

Also, the utilization image refers to an image that is generated to match a specific purpose as the standard image and may be interpreted as, for example, a disaster image, an optical image, a national defense image, a smart city image, and a maritime image.

Also, the generated utilization image may be processed into various types of analysis data through the stored analysis algorithm.

In more detail, as an analysis corresponding to a maritime subject, options of a settlement analysis, an oil detection, and a water system detection may be provided. Here, in response to a selection on the oil detection from a customer, suitable satellite images among various utilization images may be arranged.

Then, the application processing unit 130 may generate analysis data from the utilization image using a prestored analysis algorithm corresponding to at least one topic or at least one category selected from the customer system.

As a detailed example, a detailed analysis result may be generated for an image selected from a SAR image and an electro-optical (EO) image using an oil detection algorithm.

Meanwhile, the application processing unit 130 may classify the standard image into at least one of a SAR image and an EO image, and may process one of the SAR image and the EO image into the utilization image using a prestored analysis algorithm.

Also, the application processing unit 130 may classify standard image into at least one of the SAR image and the EO image and may combine and process one of the SAR image and the EO image into the utilization image using a prestored analysis algorithm.

FIG. 2 is a diagram illustrating a configuration of the satellite information reception processing unit 110 according to an example embodiment.

The satellite information reception processing unit 110 according to an example embodiment may include a satellite information collector 111, a signal processing unit 112, and a storage 113.

The satellite information collector 111 according to an example embodiment may collect satellite information received by a ground station terminal from a satellite using at least one antenna, on a cloud.

According to an example embodiment, the satellite information collector 111 may demodulate satellite information received from the ground station terminal to a signal for space communication and may perform preprocessing of formatting to a Consultative Committee for Space Data Systems (CCSDS) format.

The signal processing unit 112 according to an example embodiment may demodulate and preprocess the collected satellite information on the cloud based on a software define radio (SDR) method.

The storage 113 according to an example embodiment may record and maintain the satellite information demodulated and preprocessed on the cloud.

As a detailed example, the satellite information collector 111 may receive a plurality of pieces of satellite information through a satellite communication network using a plurality of frequency bands.

Here, the signal processing unit 112 may perform demodulation and preprocessing in consideration of a path through which the plurality of pieces of satellite information are to be transmitted based on the SDR method on the cloud.

To this end, the satellite information collector 111 may collect satellite information with a variable length having a different size and the signal processing unit 112 may sequentially demodulate each frame constituting the collected satellite information based on an idle band used for transmission of the satellite information and a reception completion point in time calculated by a frame length that is mapped to the idle band and may restore the same as the satellite information.

Therefore, only satellite information corresponding to estimated data may be recorded and maintained in the storage 113.

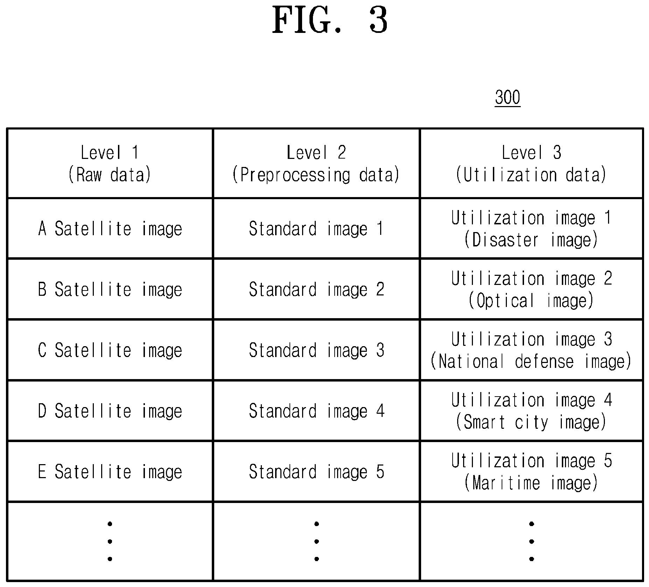

FIG. 3 illustrates an example of information stored for each level.

Referring to a table 300, raw data received from each satellite may be demodulated and preprocessed and then stored at level 1.

At level 1, A satellite image represents an image that is received from A satellite.

Then, at level 2, a variety of standardization processing may be performed on the stored raw data.

Level 2 may be expressed using standard image 1 to standard image 5.

Also, at level 3, a utilization image may be generated and stored in a form of each of at least one SAR image and EO image and a combination thereof, as an image that is processed based on a standard image.

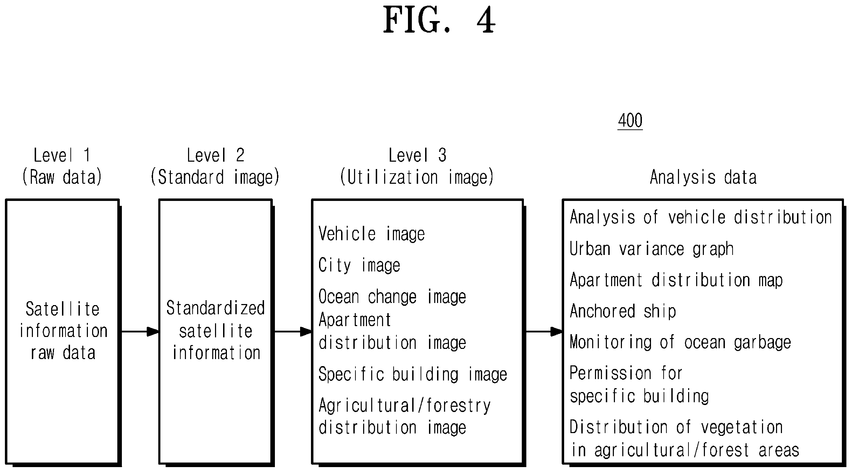

FIG. 4 illustrates a detailed example 400 for each level.

For example, satellite information corresponding to level 1 refers to a satellite image that is generated through capturing with a satellite and may be interpreted as raw data in which a format or a size and a form of data are not standardized after being collected from the satellite and only basic processing, such as demodulation or preprocessing, is performed.

That is, the satellite information corresponding to level 1 may be interpreted as a basic image that is serviced from a ground station, as satellite information that is only processed essential for full-scale utilization before being processed according to a request from a customer.

Then, a level 2 image may be interpreted as a standardized image in which noise is removed.

In detail, at level 2, standardization processing may be performed by performing at least one of radio metric processing, geometry processing, and spatial metry processing with respect to raw data of level 1.

Through standardization processing, the raw data may be processed into data that may be used regardless of a characteristic of a device or a type of a manufacturer.

At level 3, as a form in which a characteristic of an image is emphasized, an image, for example, a vehicle image, a city image, an ocean change image, an apartment distribution image, a specific building image, and an agricultural/forestry distribution image, may be processed into a SAR image, an EO image, or a combination thereof, or into a format of an image of another form.

Meanwhile, a satellite information-based analysis system may generate analysis data related to the utilization image through a prestored algorithm.

For example, the satellite information-based analysis system may generate analysis data related to a smart city based on a city image, an apartment distribution image, and the like, among EO images with a resolution of 0.5m.

In more detail, the satellite information-based analysis system may additionally provide analysis data, such as an urban apartment distribution map, a distribution rate, a variance graph permission status, a mall change, a school, a hospital, a city change, and a statistical analysis value according thereto.

Meanwhile, the satellite information-based analysis system may collect standardized satellite images of a specific building, may generate a utilization image using a prestored algorithm, may verify a permission status by verifying a building ledger through the generated utilization image, and may verify even an unauthorized building from satellite images of a corresponding city.

Meanwhile, the satellite information-based analysis system may collect satellite images of standardized terrain, may generate a utilization image using a prestored algorithm, and may generate analysis data, for example, a subsidence state, degree, and variance of the corresponding terrain through the generated utilization image.

Meanwhile, the satellite information-based analysis system may collect standardized satellite images of port, may generate a utilization image using a prestored algorithm, and may generate analysis data related to a number of ships that are anchored in the port, a number of ships that are anchored in the near sea, and a number of anchored ships compared to that in the coastal water.

In addition thereto, the satellite information-based analysis system may collect standardized satellite images of the port, may generate a utilization image using a prestored algorithm, and may generate a monitoring result of garbage, oil, and marine garbage as analysis data.

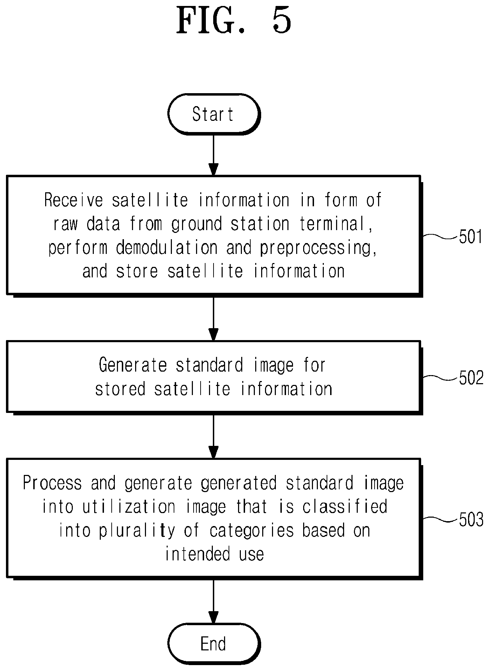

FIG. 5 is a flowchart illustrating an operation method of a satellite information-based analysis system according to an example embodiment.

In operation 501, an operation method of a satellite information-based analysis system according to an example embodiment may receive satellite information in a form of raw data from a ground station terminal, may perform demodulation and preprocessing, and may store the satellite information.

In operation 502, the operation method of the satellite information-based analysis system according to an example embodiment may generate a standard image for the stored satellite information.

In operation 503, the operation method of the satellite information-based analysis system according to an example embodiment may process and generate the generated standard image into a utilization image that is classified into a plurality of categories based on an intended use.

In detail, operation 503 of processing and generating the generated standard image into the utilization image that is classified into the plurality of categories based on the intended use may include an operation of processing the standard image into the utilization image using a prestored analysis algorithm corresponding to at least one topic or at least one category selected from a customer system.

Also, to process and generate the generated standard image into the utilization image that is classified into the plurality of categories based on the intended use, analysis data may be generated from the utilization image using the prestored analysis algorithm corresponding to at least one topic or at least one category selected from the customer system.

Also, to process and generate the generated standard image into the utilization image that is classified into the plurality of categories based on the intended use, the standard image may be classified into at least one of a SAR image and an EO image, and one of the SAR image and the EO image may be processed into the utilization image using a prestored analysis algorithm.

Also, to process and generate the generated standard image into the utilization image that is classified into the plurality of categories based on the intended use, the standard image may be classified into at least one of a SAR image and an EO image and the SAR image or the EO image may be combined and processed into the utilization image using a prestored analysis algorithm.

In this case, in the process of recording and maintaining the demodulated and preprocessed satellite information on a cloud, only the satellite information corresponding to estimated data may be recorded and maintained.

The operation method of the satellite information-based analysis system according to an example embodiment may perform application processing based on satellite information that is recorded and maintained.

For example, to perform application processing, a standard image for satellite information may be generated by performing level 2 processing of at least one among radio metric processing, geometry processing, and spatial metry processing.

According to some example embodiments, it is possible to provide technology for storing, preprocessing, and using satellite information through a cloud server to which a SAR and an analysis algorithm are mounted.

The apparatuses described herein may be implemented using hardware components, software components, and/or a combination thereof. For example, apparatuses and components described herein may be implemented using one or more general-purpose or special purpose computers, such as, for example, a processor, a controller, an arithmetic logic unit (ALU), a digital signal processor, a microcomputer, a field programmable array (FPA), a programmable logic unit (PLU), a microprocessor, or any other device capable of responding to and executing instructions in a defined manner. A processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that the processing device may include multiple processing elements and/or multiple types of processing elements. For example, the processing device may include multiple processors or a processor and a controller. In addition, different processing configurations are possible, such as parallel processors.

The software may include a computer program, a piece of code, an instruction, or some combinations thereof, for independently or collectively instructing or configuring the processing device to operate as desired. Software and/or data may be embodied permanently or temporarily in any type of machine, component, physical equipment, virtual equipment, computer storage medium or device, or in a propagated signal wave capable of providing instructions or data to or being interpreted by the processing device. The software also may be distributed over network coupled computer systems so that the software is stored and executed in a distributed fashion. In particular, the software and data may be stored by one or more computer readable storage mediums.

The method according to the above-described example embodiments may be recorded in non-transitory computer-readable media including program instructions to implement various operations which may be performed by a computer. The media may also include, alone or in combination with the program instructions, data files, data structures, and the like. The program instructions recorded on the media may be those specially designed and constructed for the purposes of the example embodiments, or they may be of the well-known kind and available to those having skill in the computer software arts. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as code produced by a compiler, and files containing higher level code that may be executed by the computer using an interpreter. The described hardware devices may be configured to act as one or more software modules in order to perform the operations of the above-described example embodiments, or vice versa.

While this disclosure includes specific example embodiments, it will be apparent to one of ordinary skill in the art that various alterations and modifications in form and details may be made in these example embodiments without departing from the spirit and scope of the claims and their equivalents. For example, suitable results may be achieved if the described techniques are performed in a different order, and/or if components in a described system, architecture, device, or circuit are combined in a different manner, and/or replaced or supplemented by other components or their equivalents.

Therefore, the scope of the disclosure is defined not by the detailed description, but by the claims and their equivalents, and all variations within the scope of the claims and their equivalents are to be construed as being included in the disclosure.

## Claims

1. A satellite information-based analysis system comprising:
a satellite information reception processing unit configured to receive satellite information in a form of raw data from a ground station terminal, to perform demodulation and preprocessing, and to store the satellite information;
a standard image generator configured to generate a standard image for the stored satellite information; and
an application processing unit configured to process and generate the generated standard image into a utilization image that is classified into a plurality of categories based on an intended use.

2. The satellite information-based analysis system of claim 1, wherein the application processing unit is configured to process the standard image into the utilization image using a prestored analysis algorithm corresponding to at least one topic or at least one category selected from a customer system.

3. The satellite information-based analysis system of claim 1 or 2, wherein the application processing unit is configured to generate analysis data from the utilization image using a prestored analysis algorithm corresponding to at least one topic or at least one category selected from a customer system.

4. The satellite information-based analysis system of any one of claims 1 to 3, wherein the application processing unit is configured to classify the standard image into at least one of a synthetic aperture radar (SAR) image and an electro-optical (EO) image, and to process one of the SAR image and the EO image into the utilization image using a prestored analysis algorithm.

5. The satellite information-based analysis system of any one of claims 1 to 4, wherein the application processing unit is configured to classify the standard image into at least one of a SAR image and an EO image, and to combine and process the SAR image or the EO image into the utilization image using a prestored analysis algorithm.

6. An operation method of a satellite information-based analysis system, the method comprising:
receiving satellite information in a form of raw data from a ground station terminal, performing demodulation and preprocessing, and storing the satellite information;
generating a standard image for the stored satellite information; and
processing and generating the generated standard image into a utilization image that is classified into a plurality of categories based on an intended use.

7. The method of claim 6, wherein the processing and the generating of the generated standard image comprises processing the standard image into the utilization image using a prestored analysis algorithm corresponding to at least one topic or at least one category selected from a customer system.

8. The method of claim 6 or 7, wherein the processing and the generating of the generated standard image comprises generating analysis data from the utilization image using a prestored analysis algorithm corresponding to at least one topic or at least one category selected from a customer system.

9. The method of any one of claims 6 to 8, wherein the processing and the generating of the generated standard image comprises:
classifying the standard image into at least one of a synthetic aperture radar (SAR) image and an electro-optical (EO) image; and
processing one of the SAR image and the EO image into the utilization image using a prestored analysis algorithm.

10. The method of any one of claims 6 to 9, wherein the processing and the generating of the generated standard image comprises:
classifying the standard image into at least one of a SAR image and an EO image; and
combining and processing the SAR image or the EO image into the utilization image using a prestored analysis algorithm.
